# EUROPEAN PATENT SPECIFICATION

(11) **EP 4 428 431 B1**
(45) Date of publication and mention of the grant of the patent: **26.08.2026**
(21) Application number: 22889644.5
(22) Date of filing: 25.08.2022
(51) Int. Cl.: F17D 5/06, G01M 3/18, G01M 3/28, F16L 11/12, F16L 55/00, G01L 19/06, G01L 19/08

(54) **MARINE HOSE FLUID LEAKAGE DETECTION SYSTEM AND METHOD FOR MANUFACTURING SAME**
SYSTEM ZUR ERKENNUNG VON FLÜSSIGKEITSLECKAGEN IN EINEM MEERESSCHLAUCH UND VERFAHREN ZUR HERSTELLUNG DAVON
SYSTÈME DE DÉTECTION DE FUITE DE FLUIDE DE TUYAU MARIN ET SON PROCÉDÉ DE FABRICATION

(30) Priority: 05.11.2021 JP 2021181213
(43) Date of publication of application: 11.09.2024
(73) Proprietor: The Yokohama Rubber Co., Ltd., Hiratsuka-shi, Kanagawa 254-8601 (JP)
(72) Inventor: ISHIBASHI Yusuke, Hiratsuka-shi, Kanagawa 254-8601 (JP)
(74) Representative: Grünecker Patent- und Rechtsanwälte PartG mbB
(86) International application number: PCT/JP2022/032053
(87) International publication number: WO 2023/079819

(56) References cited:
- EP-A1- 3 795 974
- EP-A1- 3 879 253
- EP-A1- 3 940 363
- EP-A2- 1 879 007
- WO-A1-2020/183803
- JP-A- 2003 021 568
- JP-A- 2015 143 672
- JP-A- 2021 046 929
- US-A1- 2015 128 714

## Description

### Technical Field

The present invention relates to a marine hose fluid leakage detection system and a method for manufacturing the same, and particularly relates to a marine hose fluid leakage detection system that can provide improved durability of a detector while ensuring ease of checking and certainty of detection of fluid leakage in a marine hose and a method for manufacturing the same.

### Background Art

In marine hoses, by providing a fluid retention layer between reinforcing layers, leaked fluid can be temporarily stored in the fluid retention layer to prevent leakage to the outside of the hose. In order to detect the fluid that has leaked into the fluid retention layer as just described, various fluid leakage detection systems have been proposed (for example, see Patent Document 1).

In the fluid leakage detection system proposed in Patent Document 1, when fluid flows into a fluid retention layer, pressure in a pressure holding chamber of a detector increases through a communication pipe and a check valve. This pressure change can be acquired as detected pressure data by a pressure sensor unit with the use of a return radio wave from a passive IC tag and thus is useful for reliably detecting the fluid leakage while facilitating a work for checking the fluid leakage.

The top surface of the pressure holding chamber in which the pressure sensor unit and the IC tag are housed is covered by a radio wave transmission portion. In order to improve radio wave communication, the radio wave transmission portion is disposed to be exposed in a protruding manner from the surface of a marine hose. Accordingly, when the marine hose is installed in the sea or collected into a ship, or when the marine hose is used in the sea, the radio wave transmission portion is more likely to be subjected to external force and damaged thereby. Conversely, when a metal cover or the like is simply mounted around the top of the radio wave transmission portion to protect the radio wave transmission portion, good radio wave communication is impaired. Consequently, there is room for improvement in improving durability of the detector while ensuring ease of checking and certainty of detection of the fluid leakage.

### Citation List

### Patent Literature

Patent Document 1: EP3795974 A1

### Summary of Invention

### Technical Problem

An object of the present invention is to provide a marine hose fluid leakage detection system that can provide improved durability of a detector while ensuring ease of checking and certainty of detection of fluid leakage in a marine hose and a method for manufacturing the same.

### Solution to Problem

In order to achieve the above object, a marine hose fluid leakage detection system according to an aspect of the present invention is a marine hose fluid leakage detection system that includes a communication pipe extending on a surface of a marine hose and communicating with a fluid retention layer formed in the marine hose, the marine hose being provided with a buoyant layer, a detector placed on the surface of the marine hose to communicate with the communication pipe, and a radio wave transmitter and a radio wave receiver that are placed outside the marine hose. The detector includes a casing, a pressure holding chamber disposed inside the casing, a check valve interposed between the communication pipe and the pressure holding chamber to allow only a flow from the communication pipe side to the pressure holding chamber side, and a pressure sensor unit and a passive IC tag that are housed in the pressure holding chamber, the passive IC tag being connected to the pressure sensor unit. The marine hose fluid leakage detection system is configured such that a return radio wave is transmitted from the IC tag in accordance with a transmission radio wave transmitted from the radio wave transmitter and that detected pressure data detected by the pressure sensor unit is transmitted via the return radio wave to be received by the radio wave receiver. The casing includes a base portion made of metal and formed in a cylindrical shape, a radio wave transmission portion configured to watertightly block an upper end portion side of the base portion, and three or more projection portions made of metal and projecting upward from the radio wave transmission portion. The pressure holding chamber is formed by the base portion and the radio wave transmission portion. The projection portions are disposed at intervals in a circumferential direction at positions on an outer circumferential side of the radio wave transmission portion in a plan view, and upper end portions of the respective projection portions are separated from each other.

A method for manufacturing the marine hose fluid leakage detection system according to an aspect of the present invention is a method for manufacturing the marine hose fluid leakage detection system including, in a specification determination step for the detector, with a combination of heights, widths, thicknesses, shapes, number of, and positions of the projection portions changed, grasping a strength of the return radio wave received by the radio wave receiver under predetermined identical conditions and specifying the combination in which the grasped strength of the return radio wave is higher than a predetermined threshold value; and in a placement step for the detector, placing, on the surface of the marine hose, the detector that adopts the specified combination to communicate with the communication pipe.

### Advantageous Effects of Invention

According to the marine hose fluid leakage detection system according to an aspect of the present invention, when fluid flowing through a flow path flows into the fluid retention layer, the pressure in the pressure holding chamber of the casing increases through the communication pipe and the check valve, and this pressure is held by the check valve and detected by the pressure sensor unit. The return radio wave from the passive IC tag is received by the radio wave receiver, and thus the detected pressure data by the pressure sensor unit can be acquired. Consequently, the fluid leakage can be reliably detected while a work for checking the fluid leakage is facilitated.

In addition, since the three or more projection portions made of metal and projecting upward from the radio wave transmission portion are disposed at intervals in the circumferential direction at positions on the outer circumferential side of the radio wave transmission portion in a plan view, the top surface of the radio wave transmission portion is protected by these projection portions. Consequently, the risk of damage to the radio wave transmission portion is reduced, which is advantageous for improvement of the durability of the detector. Moreover, the projection portions are disposed at intervals in the circumferential direction and the upper end portions of the projection portions are separated from each other in a plan view, and thus the disadvantage that good radio wave communication is impaired by these projection portions is avoidable. As a result, the ease of checking and certainty of detection of the fluid leakage can be ensured.

According to the method for manufacturing the marine hose fluid leakage detection system according to an aspect of the present invention, the detector adopting the combination specified as described above is placed on the surface of the marine hose to communicate with the communication pipe. Consequently, it is advantageous to accurately manufacture the fluid leakage detection system in which the durability of the detector is improved while the ease of checking and certainty of detection of the fluid leakage are ensured.

### Brief Description of Drawings

FIG. 1 is an explanatory diagram illustrating a marine hose in which a marine hose fluid leakage detection system according to an embodiment of the present invention is applied.
FIG. 2 is an explanatory diagram illustrating the fluid leakage detection system in a longitudinal cross-sectional view in which a portion of the marine hose is enlarged.
FIG. 3 is an explanatory diagram illustrating a side view of a detector of FIG. 2.
FIG. 4 is an explanatory diagram illustrating a top view of the detector of FIG. 3.
FIG. 5 is an explanatory diagram illustrating a longitudinal cross-sectional view of the detector of FIG. 2.
FIG. 6 is an explanatory diagram illustrating a top view of the inside of a pressure holding chamber in FIG. 5.
FIG. 7 is an explanatory diagram illustrating a top view of the detector of FIG. 5 from which a cap portion is removed.
FIG. 8 is an explanatory diagram illustrating an exploded state of the detector of FIG. 5.
FIG. 9 is an explanatory view illustrating a state where a radio wave transmission portion, and an IC tag and a pressure sensor unit of FIG. 8 are assembled.
FIG. 10 is an explanatory view illustrating a state where a component in which the radio wave transmission portion, the IC tag, and the pressure sensor unit of FIG. 9 are assembled is attached to a base portion.
FIG. 11 is an explanatory view illustrating a longitudinal cross-sectional view of the detector and an adapter portion that are removed from the surface of the marine hose.
FIG. 12 is an explanatory diagram illustrating a longitudinal cross-sectional view of the detector in communication with a communication unit.
FIG. 13 is an explanatory diagram illustrating a side view of a modified example of the detector.
FIG. 14 is an explanatory diagram illustrating a top view of the detector of FIG. 13.
FIG. 15 is an explanatory diagram illustrating a plan view of the position of the IC tag in a circumferential direction with respect to projection portions of FIG. 4.
FIG. 16 is an explanatory diagram illustrating a state where the position of the IC tag in the circumferential direction is different from that with respect to the projection portions of FIG. 15.

### Description of Embodiments

Hereinafter, a marine hose fluid leakage detection system (hereinafter referred to as a detection system) and a method for manufacturing the same according to embodiments of the present invention will be described with reference to the drawings.

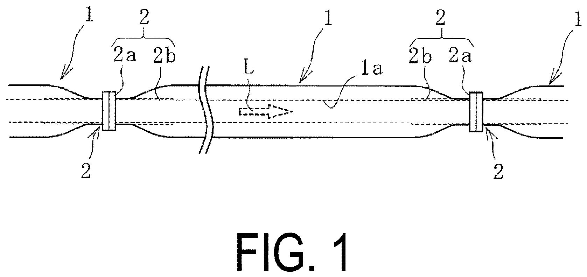

The detection system according to an embodiment of the present invention is applied to a floating type marine hose 1 illustrated in FIG. 1 and is configured to detect the presence of leakage of fluid L from a flow path 1a. The marine hose 1 is provided with connecting end portions 2 at both ends in the longitudinal direction for connecting to other marine hoses 1. The connecting end portion 2 includes a nipple 2b extending in the longitudinal direction of the marine hose 1 and a flange 2a joined to one end of the nipple 2b in the longitudinal direction. Generally, about 8 to 10 marine hoses 1 are connected and used together.

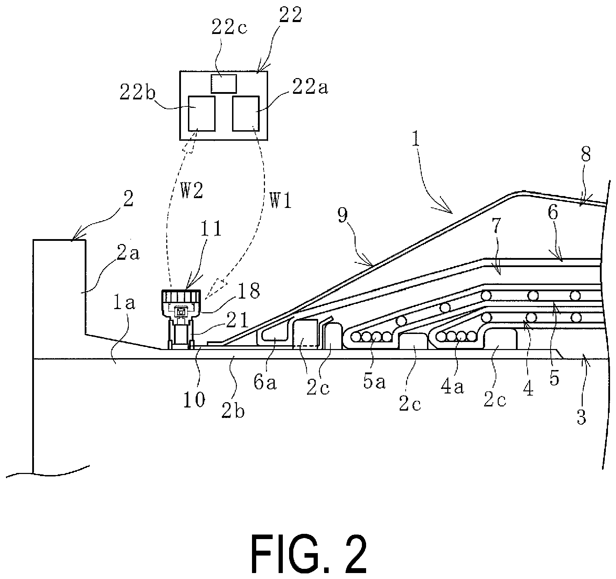

As illustrated in FIG. 2, between the nipples 2b at both ends of the marine hose 1 in the longitudinal direction, an inner surface rubber layer 3, an inner peripheral side reinforcing layer 4, a body wire layer 5, a fluid retention layer 7, an outer peripheral side reinforcing layer 6, a buoyant layer 8, and an outer covering layer 9 are laminated in this order on the outer peripheral side of the flow path 1a starting from the inner peripheral side toward the outer peripheral side of the marine hose 1. The inner peripheral side of the inner surface rubber layer 3 serves as the flow path 1a for the fluid L. Examples of the fluid L include crude oil, heavy oil, gasoline, LPG, water, seawater, chemicals (alcohols refined from gasoline), and the like.

The buoyant layer 8 is made of a material such as sponge rubber, polyurethane foam or the like that exhibits buoyancy to float the marine hose 1 above the sea. The outer covering layer 9 is made of a non-water-permeable material such as rubber, and has a line pattern or the like having excellent visibility on the surface thereof.

An appropriate material is selected for the inner surface rubber layer 3 depending on the type of the fluid L; and in a case where the fluid L is crude oil or the like, the inner surface rubber layer 3 is made of nitrile rubber or the like having excellent oil resistance. The inner peripheral side reinforcing layer 4 and the outer peripheral side reinforcing layer 6 are each formed by laminating a plurality of reinforcing cord layers in which the reinforcing cords are covered with rubber. The body wire layer 5 is configured by spirally winding metal wires around the outer peripheral rubber of the inner peripheral side reinforcing layer 4 at predetermined intervals. The inner peripheral side reinforcing layer 4, the body wire layer 5, and the outer peripheral side reinforcing layer 6 are fixed to the nipple 2b by respective nipple wires 4a, 5a, 6a at one end of each and a fixing ring 2c protruding from the outer peripheral surface of the nipple 2b. The fluid retention layer 7 formed between the inner peripheral side reinforcing layer 4 and the outer peripheral side reinforcing layer 6 is a space for storing the fluid L that has leaked from the flow path 1a.

As illustrated in FIG. 2, this detection system includes a communication pipe 10 extending on the surface of the marine hose 1 (the outer peripheral surface of the nipple 2b) and communicating with the fluid retention layer 7, a detector 11 placed on the surface of the marine hose 1 (the outer peripheral surface of the nipple 2b) to communicate with the communication pipe 10, a radio wave transmitter 22a, and a radio wave receiver 22b. A transmission radio wave W1 is transmitted from the radio wave transmitter 22a to the detector 11, and a return radio wave W2 is transmitted from the detector 11 to the radio wave receiver 22b.

The radio wave transmitter 22a and the radio wave receiver 22b are arranged on the outside of the marine hose 1 separately from the marine hose 1. In this embodiment, a communication unit 22 in which the radio wave transmitter 22a, the radio wave receiver 22b, and a calculation unit 22c are integrated is used, but these units may be separate and independent. A known computer is used as the calculation unit 22c, and for example, a monitor or the like is attached to the communication unit 22.

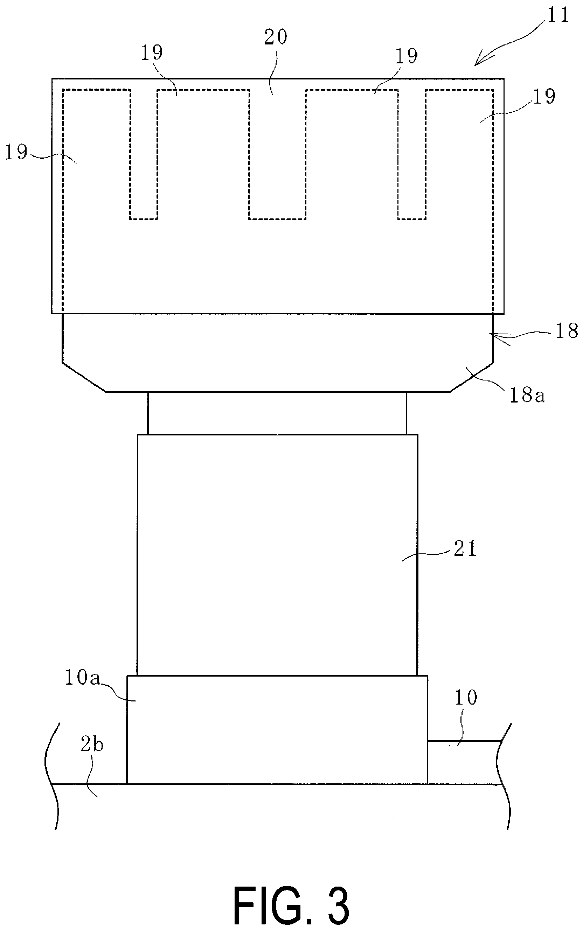

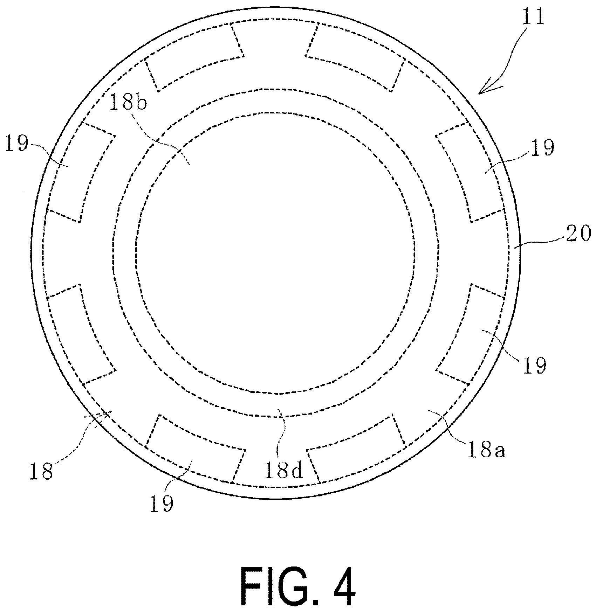

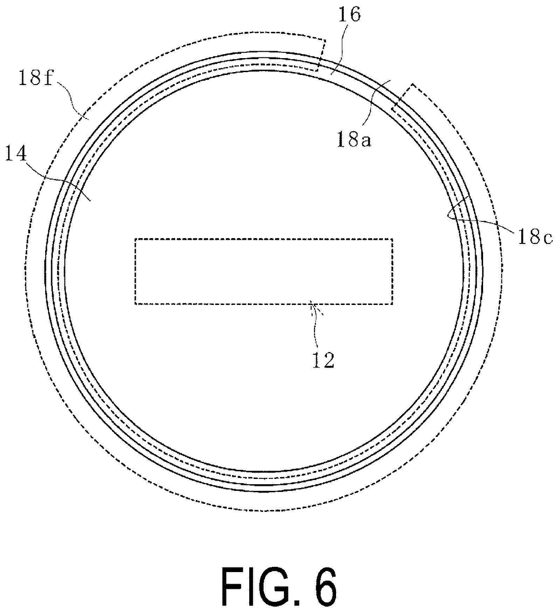

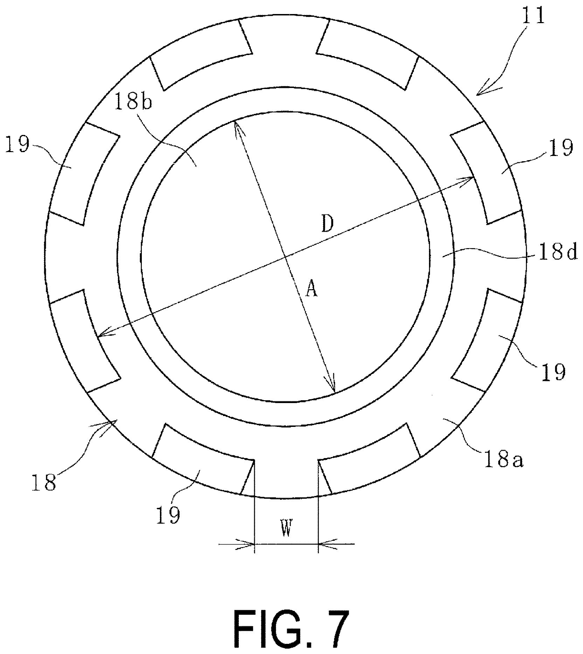

As illustrated in FIGS. 3 to 8, the detector 11 includes a casing 18, a pressure holding chamber 18c disposed inside the casing 18, a check valve 17 disposed on the casing 18, and a pressure sensor unit 15 and a passive IC tag 12 that are housed in the pressure holding chamber 18c. In this embodiment, a cap portion 20 adapted to cover the top of the casing 18 is provided. The cap portion 20 can optionally be provided.

The detector 11 is connected to the communication pipe 10 via an adapter portion 21 made of metal and formed in a cylindrical shape. More specifically, a cylindrical pipe end connection portion 10a located at an end portion of the communication pipe 10 and the adapter portion 21 are screwed to be connected to each other. Watertightness is ensured between a lower surface of a base portion 18a and an upper end portion of the adapter portion 21 by an annular sealant 18s (O-ring) interposed therebetween. The inside of the adapter portion 21 is an introduction chamber 21a having watertightness. The adapter portion 21 communicating with the communication pipe 10 is attachably and detachably disposed upright on the surface of the marine hose 1 (the outer peripheral surface of the nipple 2b) via the pipe end connection portion 10a. The adapter portion 21 is formed of, for example, stainless steel.

A lower end portion of the casing 18 and the upper end portion of the adapter portion 21 are screwed to be connected to each other. The casing 18 is attachably and detachably attached via the adapter portion 21 to the communication pipe 10 to communicate therewith. The adapter portion 21 can be optionally used, and when the adapter portion 21 is not used, the lower end portion of the casing 18 and the pipe end connection portion 10a are screwed to be connected to each other.

The casing 18 includes the base portion 18a made of metal and formed in a cylindrical shape, a radio wave transmission portion 18b for watertightly blocking the upper end portion side of the base portion 18a, and three or more projection portions 19 made of metal and projecting upward from the radio wave transmission portion 18b. In this embodiment, the casing 18 further includes an annular fixing portion 18d. The base portion 18a and the projection portions 19 are basically an integral body. The base portion 18a, the fixing portion 18d, and the projection portions 19 are formed of, for example, stainless steel.

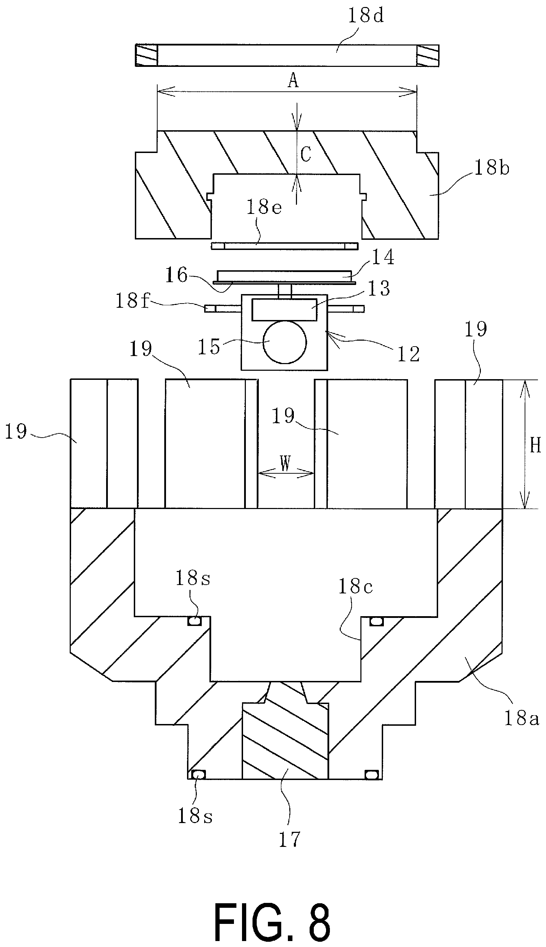

As illustrated in FIG. 8, the base portion 18a includes inside a large-diameter recess in which the radio wave transmission portion 18b is disposed, and a small-diameter recess connected to a lower portion of the large-diameter recess. An upper end of the check valve 17 attached to a lower end portion of the base portion 18a is exposed at a bottom surface of the small-diameter recess. The annular sealant 18s (O-ring) is disposed inside the base portion 18a (at a bottom surface portion of the large-diameter recess) and on the lower surface of the base portion 18a. Note that the sealant 18s is appropriately disposed at a required position.

In this embodiment, the radio wave transmission portion 18b is formed in a disc shape and has a recess on a lower surface thereof. The recess on the lower surface of the radio wave transmission portion 18b and the small-diameter recess inside the base portion 18a are set to face each other. The radio wave transmission portion 18b is mounted on the base portion 18a such that the lower surface is in contact with the bottom surface portion of the large-diameter recess inside the base portion 18a.

Since the sealant 18s is interposed between the lower surface of the radio wave transmission portion 18b and the bottom surface portion of the large-diameter recess inside the base portion 18a, the upper end portion side of the base portion 18a is watertightly blocked by the radio wave transmission portion 18b. In addition, a portion surrounded by the base portion 18a and the radio wave transmission portion 18b forms the pressure holding chamber 18c. In other words, the pressure holding chamber 18c having watertightness is formed by the small-diameter recess inside the base portion 18a and the recess on the lower surface of the radio wave transmission portion 18b.

The radio wave transmission portion 18b includes a circular cutout portion in a plan view at an outer edge of the top surface. The annular fixing portion 18d is disposed in the cutout portion. An outer circumferential surface of the fixing portion 18d is attachably and detachably screwed to an inner circumferential surface of an upper end opening of the base portion 18a. The radio wave transmission portion 18b is fixed to the base portion 18a in a state where the outer circumferential edge portion is pressed from above by the fixing portion 18d screwed with the inner circumferential surface of the upper end opening of the base portion 18a. As just described, the radio wave transmission portion 18b is fixed to the base portion 18a via the annular fixing portion 18d engaged with an outer edge portion of the radio wave transmission portion 18b.

The relative dielectric constant of the radio wave transmission portion 18b is set to 5.0 or less in order to easily allow the permeation of the transmission radio wave W1 and the return radio wave W2, is set to, for example, 2.0 or more and 5.0 or less, and is more preferably set to 2.5 or more and 3.0 or less. The radio wave transmission portion 18b is made of, for example, polycarbonate, polyamide, or epoxy resin as the material thereof in consideration of durability, shock resistance, and the like.

Further, the radio wave transmission portion 18b and the base portion 18a are not limited to the shapes illustrated in this embodiment as long as the pressure holding chamber 18c can be formed by using the radio wave transmission portion 18b and the base portion 18a. Furthermore, the radio wave transmission portion 18b may be fixed to the base portion 18a by using another component instead of the fixing portion 18d or by using another component in addition to the fixing portion 18d. For example, in order to more reliably fix the radio wave transmission portion 18b to the base portion 18a, a screw or the like may be disposed to extend radially inward from the outer circumferential surface of the base portion 18a, and the tip portion thereof may be embedded into the outer circumferential surface of the radio wave transmission portion 18b.

The projection portions 19 are disposed at intervals in the circumferential direction at positions on the outer circumferential side of the radio wave transmission portion 18b in a plan view. The projection portions 19 are preferably disposed at equal intervals in the circumferential direction of the radio wave transmission portion 18b. For example, three or more and eight or less projection portions 19 are disposed.

In this embodiment, the projection portion 19 extending straight upward is employed, but the shape is not limited to this shape. However, when upper end portions of the respective projection portions 19 are in contact with (joined to) each other, good radio wave communication between the IC tag 12 and the communication unit 22 cannot be ensured. Consequently, the upper end portions of the respective projection portions 19 are separated from each other.

The cap portion 20 has radio wave permeability and is formed of various resins such as polyvinyl chloride or rubber. The cap portion 20 is formed in a shape in which a cylindrical portion externally fitted to the entire length of each of the projection portions 19 and at least the upper end portion of the base portion 18a, and an end surface closing an upper end of the cylindrical portion are integrated. By attaching the cap portion 20 to the casing 18, the inner peripheral side region of each of the projection portions 19 above the radio wave transmission portion 18b is watertightly blocked from the outside. The cap portion 20 may be orange so as to be noticeable in the ocean.

The check valve 17 is disposed between the pressure holding chamber 18c and the introduction chamber 21a. The check valve 17 allows only the flow of the fluid L and gas from the introduction chamber 21a side to the pressure holding chamber 18c side, and restricts (blocks) the flow from the pressure holding chamber 18c side to the introduction chamber 21a side. In other words, the check valve 17 interposed between the communication pipe 10 and the pressure holding chamber 18c allows only the flow from the communication pipe 10 side to the pressure holding chamber 18c side, and restricts the flow from the pressure holding chamber 18c side to the communication pipe 10 side. Thus, when pressure P of the pressure holding chamber 18c rises, the pressure state is maintained. A known check valve can be used as the check valve 17.

The IC tag 12 includes an IC chip 13 and an antenna unit 14 connected to the IC chip 13. The pressure sensor unit 15 is connected to the IC tag 12 (the IC chip 13). The IC chip 13 has a very small size, for example, a vertical dimension and a horizontal dimension of 30 mm or less (corresponding to an outer diameter of 30 mm or less) and a thickness of 5 mm or less. The size of the antenna unit 14 is also very small, for example, the vertical dimension and the horizontal dimension are each 50 mm or less (corresponding to an outer diameter of 50 mm or less) and the thickness is 10 mm or less. In this embodiment, a ceramic antenna is used as the antenna unit 14, so the antenna is very compact.

A plate-shaped metal ground unit 16 is arranged in contact with the lower surface of the antenna unit 14. In this embodiment, the IC tag 12 and the pressure sensor unit 15 are placed in the pressure holding chamber 18c in a state where the ground unit 16 is placed on a C-shaped ring 18f attachably and detachably fitted into an annular groove formed in the recess on the lower surface of the radio wave transmission portion 18b and an annular spacer 18e is disposed on the top surface of the antenna unit 14. The IC tag 12 and the pressure sensor unit 15 may be placed in the pressure holding chamber 18c without using the C-shaped ring 18f. The spacer 18e can be optionally provided. The antenna unit 14 employing the ceramic antenna, the small check valve 17 that can withstand high pressure (for example, 7 to 8 MPa), and the ground unit 16 are combined, which greatly contributes to downsizing of the detector 11.

The ground unit 16 may be set in contact with the metal base portion 18a. With such a configuration, the base portion 18a and the projection portions 19 can assertively function as an antenna, and thus good radio wave communication between the IC tag 12 and the communication unit 22 can be easily ensured.

The pressure sensor unit 15 detects the pressure P in the pressure holding chamber 18c. The size of the pressure sensor unit 15 is about the same as that of the IC chip 13. Although the IC chip 13 and the pressure sensor unit 15 are suspended in the drawing, the IC chip 13 and the pressure sensor unit 15 may be placed flat as the antenna unit 14.

When the transmission radio wave W1 is transmitted from the radio wave transmitter 22a, the return radio wave W2 is transmitted from the IC tag 12 in accordance with the transmission radio wave W1, and the return radio wave W2 is received by the radio wave receiver 22b. In other words, the IC tag 12 and the communication unit 22 form a radio frequency identification (RFID) system. The frequencies and outputs of the radio waves W1 and W2 to be communicated are appropriately set; however, since the passive IC tag 12 is used, the communication distance of the radio waves W1 and W2 between the IC tag 12 and the communication unit 22 is, for example, in the range of several tens of cm and several meters.

In this detection system, the return radio wave W2 is used to send the detected pressure data of the pressure holding chamber 18c detected by the pressure sensor unit 15 to the radio wave receiver 22b. The detected pressure data received by the radio wave receiver 22b is input into the calculation unit 22c.

The calculation unit 22c stores a reference value Pc of the pressure P in the pressure holding chamber 18c for determining whether the fluid L is leaking from the flow path 1a. In order to avoid a wrong detection, an appropriate range of the reference value Pc is determined in advance by conducting experiments and simulations in consideration of the specifications and use conditions of the marine hose 1, and the reference value Pc is set within this appropriate range and stored in the calculation unit 22c.

In this embodiment, the IC chip 13 stores position identifying information for identifying the installation position of the IC tag 12 on the marine hose 1. Then, the position identifying information is transmitted to the radio wave receiver 22b via the return radio wave W2. Other information may be stored in the IC chip 13 and transmitted via the return radio wave W2. For example, information such as the specification information of the marine hose 1, the manufacturing information, the period when the IC tag 12 is placed in the marine hose 1, or the like may be stored in the IC chip 13, and the information may be transmitted to the radio wave receiver 22b.

An example of the procedures of a method for manufacturing this detection system will be described below.

The marine hose 1 provided with the fluid retention layer 7 and the buoyant layer 8 is manufactured by a known method. The existing marine hose 1 provided with the fluid retention layer 7 and the buoyant layer 8 can also be used. Then, the communication pipe 10 that communicates with the fluid retention layer 7 is disposed to extend on the surface of the marine hose 1. The pipe end connection portion 10a is disposed at the end portion of the communication pipe 10 and fixed to the surface of the marine hose 1.

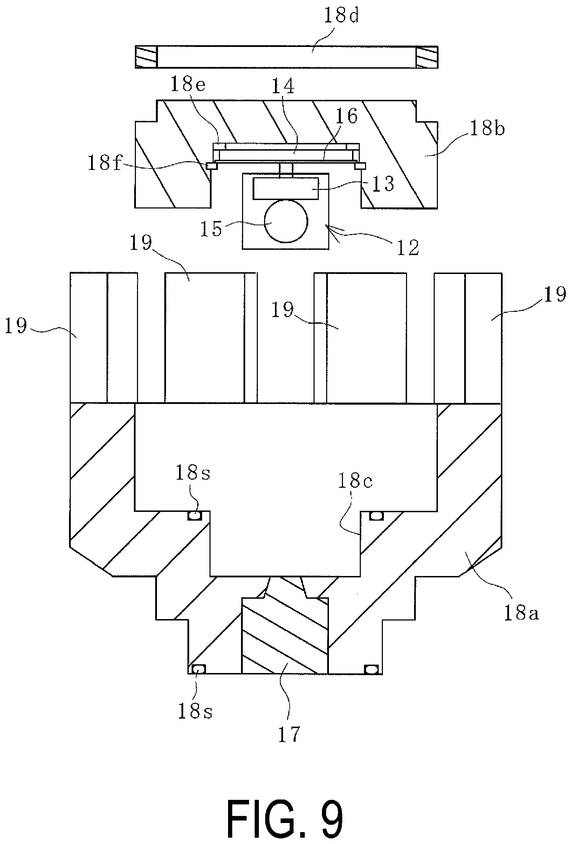

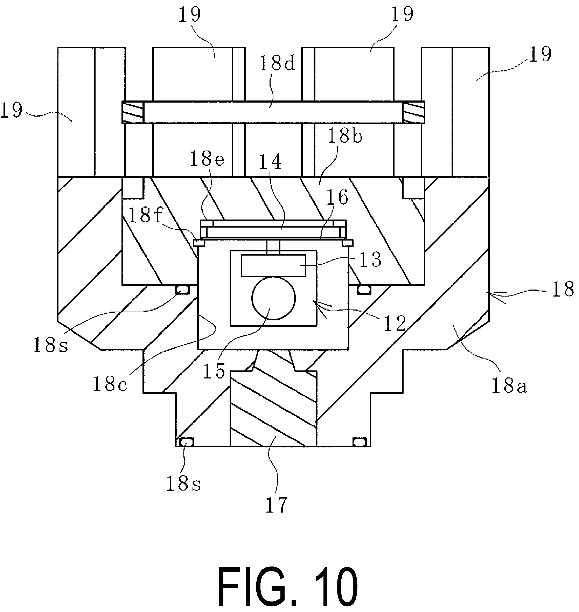

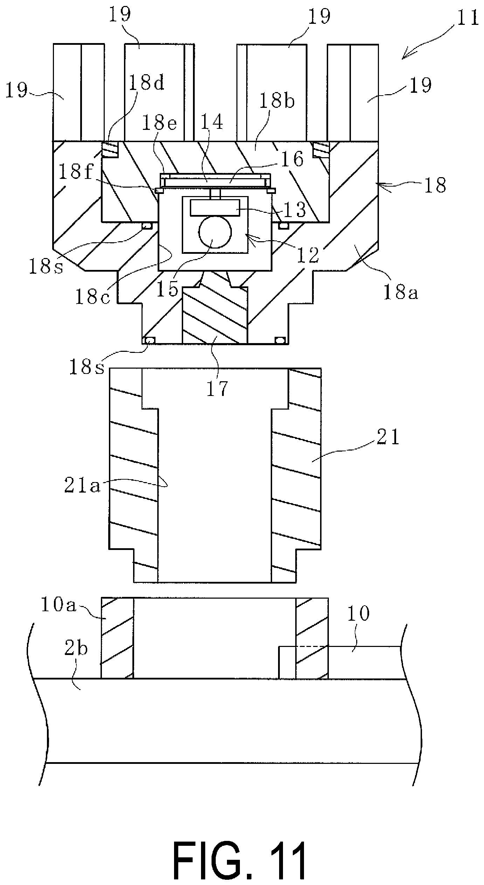

As illustrated in FIG. 9 from the state illustrated in FIG. 8, in the detector 11, the IC tag 12 (the IC chip 13 and the antenna unit 14), the ground unit 16, and the pressure sensor unit 15 are mounted on the radio wave transmission portion 18b together with the spacer 18e and the C-shaped ring 18f. Next, as illustrated in FIG. 10, the component in which the radio wave transmission portion 18b, the IC tag 12, the pressure sensor unit 15, and the like are mounted is placed inside the base portion 18a. Subsequently, as illustrated in FIG. 11, the outer circumferential surface of the fixing portion 18d is screwed with the inner circumferential surface of the upper end opening of the base portion 18a, and the radio wave transmission portion 18b is fixed to the base portion 18a via the fixing portion 18d.

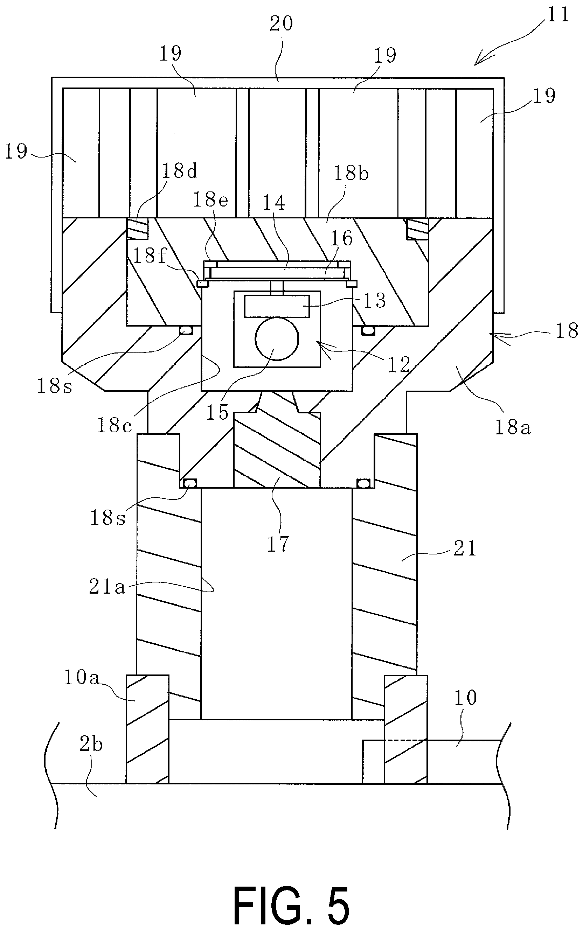

Then, in a placement step for the detector 11, the detector 11 is placed on the surface of the marine hose 1 via the pipe end connection portion 10a, and thus the state illustrated in FIG. 5 is obtained. In this embodiment, the detector 11 (the base portion 18a) is connected to the pipe end connection portion 10a via the adapter portion 21. When the adapter portion 21 is not used, the detector 11 (the base portion 18a) is connected to the pipe end connection portion 10a. Regardless of whether the adapter portion 21 is used or not, the upper ends of the projection portions 19 are not projected above the flange 2a in a state where the detector 11 is placed on the surface of the marine hose 1. The cap portion 20 may be attached to the casing 18 at any given timing.

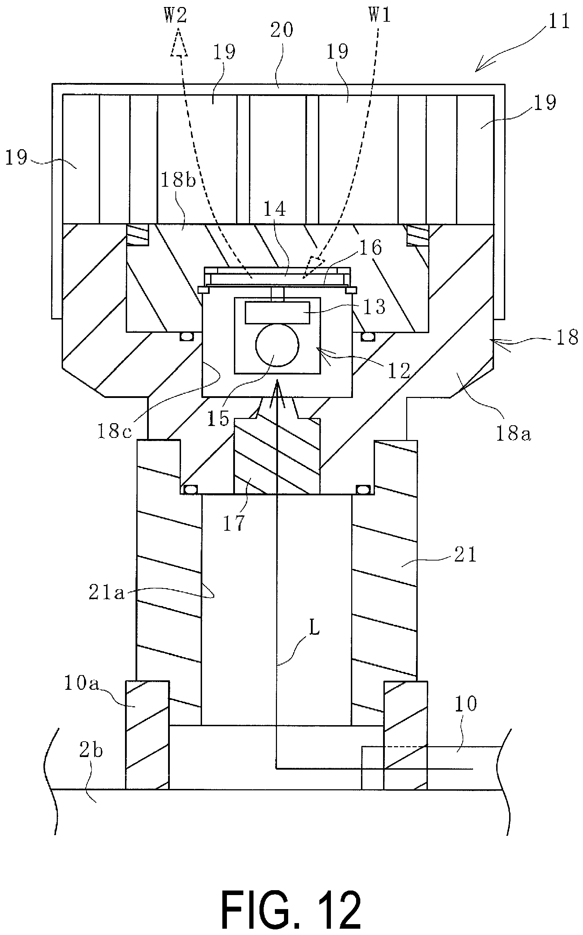

The detection system after the completion of manufacturing such that the detector 11 is disposed on the surface of the marine hose 1 is used as illustrated in FIG. 12. The use of this detection system will be described below.

In manufacturing this detection system, a specification determination step for the detector 11 is performed. The larger the exposed area of the top surface of the radio wave transmission portion 18b is, the more advantageous it is to maintain good radio wave communication between the IC tag 12 and the communication unit 22; however, it is disadvantageous to ensure pressure resistance of the radio wave transmission portion 18b. Accordingly, when the top surface of the radio wave transmission portion 18b is circular, a diameter A is, for example, 40 mm or more and 70 mm or less. In other words, the top surface of the radio wave transmission portion 18b preferably has the exposed area corresponding to the diameter A of 40 mm or more and 70 mm or less. In addition, the larger a thickness C of the top surface of the radio wave transmission portion 18b is, the more advantageous it is to ensure pressure resistance; however, it is disadvantageous to maintain good radio wave communication between the IC tag 12 and the communication unit 22. Accordingly, the thickness C of the top surface of the radio wave transmission portion 18b is set to, for example, 5 mm or more and 15 mm or less.

In this specification determination step, the combination of the specifications (heights H, thicknesses, shapes), number, and positions of the projection portions 19 is determined. The specification, number, and positions of the projection portions 19 are based on the premise that the radio wave transmission portion 18b can be protected and good radio wave communication between the IC tag 12 and the communication unit 22 can be maintained.

In order to protect the radio wave transmission portion 18b by the projection portions 19, it is preferable that a height H and a thickness of each of the projection portions 19 be large to some extent; however, it is an essential condition for the height H that the upper end of the projection portion 19 not be projected above the flange 2a in a state where the detector 11 is placed on the surface of the marine hose 1. In addition, when the height H and thickness of the projection portion 19 are extremely large, the occupied space increases, and thus the height H of the projection portion 19 is determined to be in the range of, for example, 15 mm or more and 40 mm or less, for example, and the thickness is determined to be in the range of, for example, 3 mm or more and 8 mm or less. The height H of the projection portion 19 is preferably 35% or more and 45% or less of the diameter A of the top surface of the radio wave transmission portion 18b.

Regarding the number and arrangement of the projection portions 19, as described above, for example, three to eight projection portions 19 are disposed at equal intervals in the circumferential direction of the radio wave transmission portion 18b. The width of the projection portion 19 is determined such that an interval W between the adjacent projection portions 19 in the circumferential direction is, for example, 10 mm or more and is more preferably 15 mm or more.

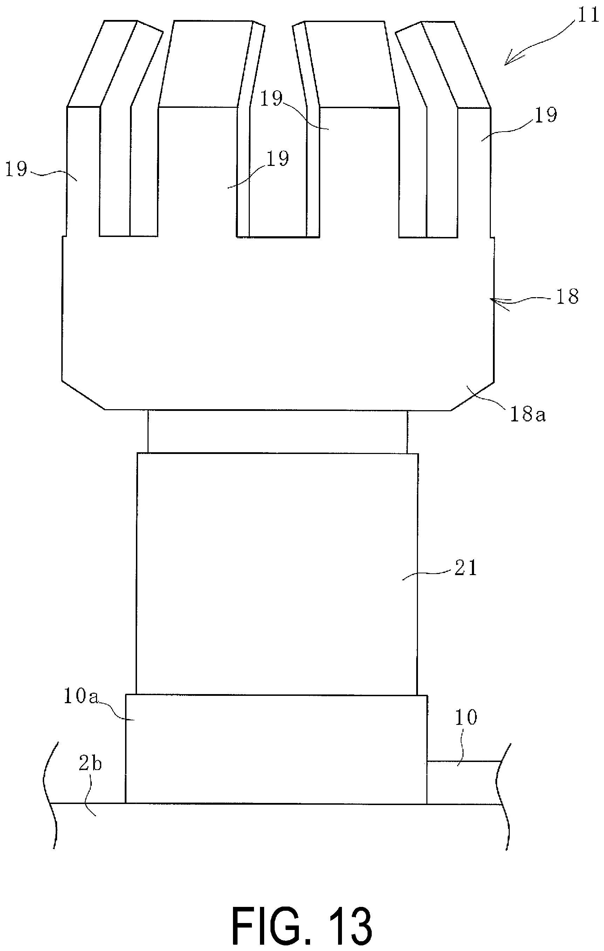

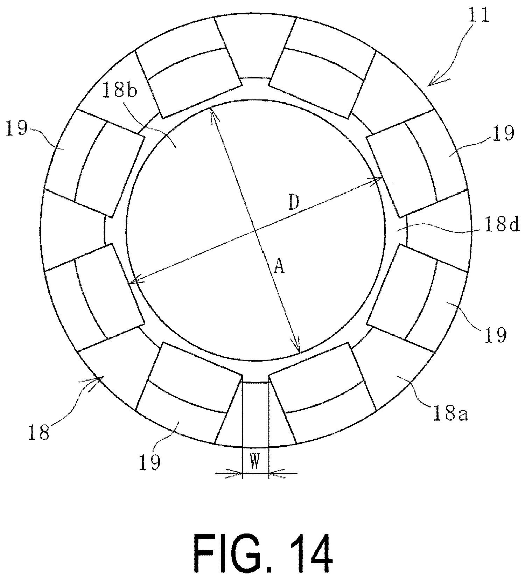

Basically, the shape of the projection portion 19 is preferably a shape extending straight upward; however, another shape may be adopted in order to improve protective effect on the radio wave transmission portion 18b. As illustrated in FIGS. 13 and 14, each projection portion 19 may be bent at an intermediate position in the vertical direction and extend toward the center side of the radio wave transmission portion 18b in a plan view.

However, the lower end of each projection portion 19 is disposed on the outer circumference side of the outer circumferential edge of the top surface of the radio wave transmission portion 18b, and the height position at which the projection portion 19 is bent midway is set to a position of 8 mm or higher from the top surface of the radio wave transmission portion 18b. Further, in a plan view, a gap D between opposed upper ends of portions above the bent positions of the projection portions 19 is 50% or more, preferably 70% or more, and more preferably 100% or more of the diameter A of the top surface of the radio wave transmission portion 18b. Furthermore, in a plan view, a gap W between upper ends of portions above the bent positions of the projection portions 19 adjacent to each other in the circumferential direction is preferably 3 mm or more and more preferably 5 mm or more.

The specifications of the projection portions 19 are basically the same. However, the projection portions 19 having different specifications may be disposed in a mixed manner. For example, two types of projection portions 19 having different heights H may be alternately disposed one by one in the circumferential direction.

In this specification determination step, the transmission radio wave W1 is transmitted from the radio wave transmitter 22a to the IC tag 12 under predetermined identical conditions with the combination of the heights H, widths, thicknesses, shapes, number, and arrangement of the projection portions 19 changed within the aforementioned ranges, and the strength of the return radio wave W2 received by the radio wave receiver 22b is grasped. For example, the communication unit 22 is disposed directly above the detector 11 at a distant location therefrom by about 1 m to grasp the strength of the return radio wave W2.

Then, the combination in which the grasped strength of the return radio wave W2 is higher than a predetermined threshold value (a value at which good radio wave communication between the IC tag 12 and the communication unit 22 can be maintained) is specified. In a placement step for the detector 11, the detector 11 adopting the specified combination is placed on the surface of the marine hose 1 to communicate with the communication pipe 10.

When the adapter portion 21 is used, the position of the detector 11 with respect to the marine hose 1 is changed in accordance with the length of the adapter portion 21. This may affect the state of radio wave communication between the IC tag 12 and the communication unit 22. Accordingly, the range in length of the adapter portion 21 in which good radio wave communication between the IC tag 12 and the communication unit 22 can be maintained is grasped in advance, thereby setting the length of the adapter portion 21 such that good radio wave communication can be maintained.

The position of the IC tag 12 (the antenna unit 14) in the circumferential direction with respect to each of the projection portions 19 in a plan view may affect the state of radio wave communication between the IC tag 12 and the communication unit 22. Accordingly, for the detector 11 adopting the combination specified as described above, the position of the IC tag 12 (the antenna unit 14) in the circumferential direction with respect to each of the projection portions 19 in a plan view may be further determined.

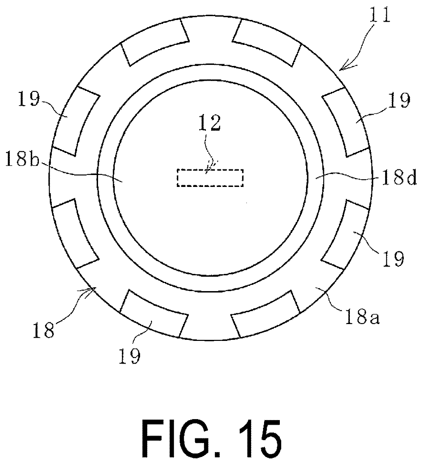

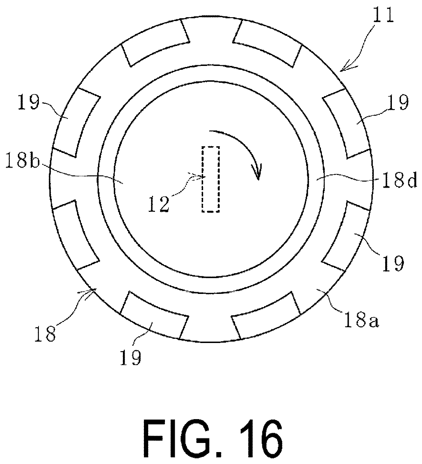

Therefore, as illustrated in FIGS. 15 and 16, a plurality of different positions of the IC tag 12 (the antenna unit 14) in the circumferential direction with respect to the projection portions 19 in a plan view are set, and the transmission radio wave W1 is transmitted from the radio wave transmitter 22a to the IC tag 12 under predetermined identical conditions, and the strength of the return radio wave W2 received by the radio wave receiver 22b is grasped. For example, the communication unit 22 is disposed directly above the detector 11 at a distant location therefrom by about 1 m to grasp the strength of the return radio wave W2. The operation of grasping the strength of the return radio wave W2 may be performed in advance in the specification determination step for the detector 11, or may be performed in the placement step of placing the detector 11 on the surface of the marine hose 1.

In the placement step for the detector 11, the detector 11 is placed on the surface of the marine hose 1 to communicate with the communication pipe 10 in a state where the IC tag 12 (the antenna unit 14) is fixed at the position in the circumferential direction where the grasped strength of the return radio wave W2 is relatively high (highest) among the plurality of different positions in the circumferential direction.

Hereinafter, an example of a detection procedure for determining whether or not the fluid L is leaking from the flow path 1a by using this detection system will be described.

Using a work boat or the like, a worker periodically or when necessary approaches the marine hose 1 and performs work to confirm whether there is leakage of the fluid L. Then, as illustrated in FIG. 2, the communication unit 22 is operated to transmit the transmission radio wave W1 from the radio wave transmitter 22a toward the detector 11, and the transmission radio wave W1 is used to generate electric power in the IC tag 12. The IC tag 12 transmits the return radio wave W2 by the electric power, and the radio wave receiver 22b receives the return radio wave W2. At this time, the detected pressure data detected by the pressure sensor unit 15 is sent via the return radio wave W2, and the detected pressure data received by the radio wave receiver 22b is input into the calculation unit 22c. The communication unit 22 may also be configured to display the pressure value of the received detected pressure data.

The calculation unit 22c compares the pressure value of the input detected pressure data with the reference value Pc. When the fluid L does not flow into the fluid retention layer 7, there is no particularly large fluctuation in the pressure P of the pressure holding chamber 18c, and thus the pressure value of the detected pressure data is smaller than the reference value Pc. As a result, the calculation unit 22c determines that the fluid L is not leaking from the flow path 1a, and notifies the result by a monitor display or a sound.

On the other hand, when the inner surface rubber layer 3, the inner peripheral side reinforcing layer 4, and the like are damaged, the fluid L flows into the fluid retention layer 7 from the flow path 1a, and as this happens, as illustrated in FIG. 2, the fluid L flows through the communication pipe 10, the introduction chamber 21a, and the check valve 17, and the pressure P in the pressure holding chamber 18c increases. The increased pressure P is held by the check valve 17 and detected by the pressure sensor unit 15. Consequently, when the transmission radio wave W1 is transmitted from the radio wave transmitter 22a to the detector 11 during the leakage confirmation work of the fluid L, the maximum pressure value of the pressure P up to now is received by the radio wave receiver 22b as detected pressure data detected by the pressure sensor unit 15 and is input into the calculation unit 22c.

The calculation unit 22c compares the pressure value of the input detected pressure data with the reference value Pc. As a result, when the pressure value of the detected pressure data is equal to or higher than the reference value Pc, it is determined that the fluid L is leaking from the flow path 1a, and the result is notified by a monitor display or a sound. When the pressure value of the detected pressure data is less than the reference value Pc, it is determined that the fluid L is not leaking from the flow path 1a, and the result is notified by a monitor display or a sound. As just described, whether the fluid L is leaking can be determined based on the detected pressure data (the size of the detected pressure) received by the radio wave receiver 22b.

In a case where the fluid L flowing through the flow path 1a is water, the water leaks and flows into the pressure holding chamber 18c, and then the IC tag 12 (the antenna unit 14) is submerged. In this case, the radio wave communication between the radio wave transmitter 20a and the IC tag 12 is cut off. Accordingly, even though the transmission radio wave W1 is transmitted from the radio wave transmitter 20a, the detected pressure data received by the radio wave receiver 22b becomes zero (the detected pressure data cannot be received). Consequently, when the fluid L is water, and for example, the return radio wave W2 cannot be received even though the transmission radio wave W1 is transmitted, a setting is performed so as to determine that the fluid L is leaking from the flow path 1a. Note that even when the IC tag 12 (antenna unit 14) is immersed in oil, the radio wave communication between the radio wave transmitter 20a and the IC tag 12 is not cut off; however, in a case where the type of the fluid L cutting off the radio wave communication is known in advance, and the fluid is the fluid L that cuts off the communication, a setting is performed so as to determine whether or not there is a leak as in the case of water.

Since this detection system uses the passive IC tag 12, the work of monitoring the status of the battery life becomes unnecessary. In addition, the pressure in the pressure holding chamber 18c is held by using the check valve 17, and the detected pressure data detected by the pressure sensor unit 15 and received by the radio wave receiver 22b is used as an index, and thereby whether the fluid L leaks from the flow path 1a can be more reliably determined.

In other words, since the passive IC tag 12 is used, the detected pressure data detected by the pressure sensor unit 15 cannot be sequentially determined; however, the maximum pressure P in the pressure holding chamber 18c generated before the work of confirming fluid leakage is performed can be determined. When the fluid L leaks from the flow path 1a, there is an excessively large value in the history of the pressure P. Even when the fluid L leaks, the fluid L, for example, may flow out from the fluid retention layer 7 and the pressure P at the time of confirmation work may decrease. Even in such a case, it is possible to reliably determine the presence or absence of the leakage of the fluid L, even though the detection system uses a passive IC tag 12.

In this embodiment, the calculation unit 22c automatically determines whether the fluid L leaks from the flow path 1a. In addition, for example, the operator can determine whether the fluid L leaks by comparing the preset reference value Pc with the pressure value of the detected pressure data received by the radio wave receiver 22b.

The operator can perform the work of confirming fluid leakage by holding the handy communication unit 22 or by mounting the communication unit 22 on a drone. Using a drone eliminates the need for the operator to approach the marine hose 1 for performing the confirmation work.

In the detector 11, the top surface of the radio wave transmission portion 18b is protected by the aforementioned projection portions 19. Consequently, the risk of damage to the radio wave transmission portion 18b is reduced, which is advantageous for improvement of the durability of the detector 11. The projection portions 19 are disposed at intervals in the circumferential direction and the upper end portions of the projection portions 19 are separated from each other in a plan view, and thus the disadvantage that good radio wave communication between the IC tag 12 and the communication unit 22 is impaired by the projection portions 19 is avoidable. As a result, the ease of checking and certainty of detection of the fluid leakage can be ensured while the top surface of the radio wave transmission portion 18b is protected.

In addition, according to the aforementioned method for manufacturing the detection system, the detector 11 in which the combination of the specification (the height H, width, thickness, shape), number, and arrangement of the projection portions 19 is specified and adopted as described above is placed on the surface of the marine hose 1 to communicate with the communication pipe 10. Consequently, it is advantageous to accurately manufacture the detection system in which the durability of the detector 11 is improved while the ease of checking and certainty of detection of the fluid leakage are ensured.

In this embodiment, since the top surface of the radio wave transmission portion 18b is flat, it is advantageous to reduce the projection height H of the projection portion 19 projecting upward for protecting the radio wave transmission portion 18b. The radio wave transmission portion 18b is not limited to the specification in which the top surface is flat. For example, the radio wave transmission portion 18b may be formed in a dome shape (substantially hemispherical shape) projecting upward. The dome-shaped radio wave transmission portion 18b can easily improve pressure resistance against external pressure.

When the cap portion 20 is attached to the casing 18, marine gloss (adhesion of marine organisms) to the top surface of the radio wave transmission portion 18b can be prevented. In general, not attaching the cap portion 20 is more advantageous to maintain good radio wave communication between the IC tag 12 and the communication unit 22 than attaching the cap portion 20. However, depending on the specification of the cap portion 20 (for example, made of polyvinyl chloride having a thickness of about 1 mm to 3 mm), the state of radio wave communication may be further improved. Since a dielectric substance has an effect of causing a hole through which radio wave passes to seem large (the wavelength of the radio wave becomes shorter than that in the air), this effect is estimated to contribute to the improvement of radio wave communication by the attachment of the cap portion 20 to the casing 18.

For a marine hose equipped with a conventional oil pod, this detection system may be constructed by preparing the IC tag 12, the pressure sensor unit 15, the check valve 17, the communication unit 22, and the like. Accordingly, the existing marine hose itself may be advantageously used as is without modification.

In this embodiment, the position identifying information for identifying the placement position of the IC tag 12 on the marine hose 1 is transmitted via the return radio wave W2 transmitted from the IC tag 12. As a result, by analyzing the return radio wave W2 (position identifying information) received by the radio wave receiver 22b, it becomes easier to more reliably identify the position where the fluid L is leaking.

### Reference Signs List

1 Marine hose
1a Flow path
2 Connecting end portion
2a Flange
2b Nipple
2c Fixing ring
3 Inner surface rubber layer
4 Inner peripheral side reinforcing layer
4a Nipple wire
5 Body wire layer
5a Nipple wire
6 Outer peripheral side reinforcing layer
6a Nipple wire
7 Fluid retention layer
8 Buoyant layer
9 Outer covering layer
10 Communication pipe
10a Pipe end connection portion
11 Detector
12 IC tag
13 IC chip
14 Antenna unit
15 Pressure sensor unit
16 Ground unit
17 Check valve
18 Casing
18a Base portion
18b Radio wave transmission portion
18c Pressure holding chamber
18d Fixing portion
18e Spacer
18f C-shaped ring
18s Sealant
19 Projection portion
20 Cap portion
21 Adapter portion
21a Introduction chamber
22 Communication unit
22a Radio wave transmitter
22b Radio wave receiver
22c Calculation unit

## Claims

1. A marine hose fluid leakage detection system, comprising:
a communication pipe (10) extending on a surface of a marine hose (1) and communicating with a fluid retention layer (7) formed in the marine hose, the marine hose being provided with a buoyant layer (8);
a detector (11) placed on the surface of the marine hose to communicate with the communication pipe; and
a radio wave transmitter (22a) and a radio wave receiver (22b) that are placed outside the marine hose,
the detector comprising a casing (18), a pressure holding chamber (18c) disposed inside the casing, a check valve (17) interposed between the communication pipe and the pressure holding chamber to allow only a flow from the communication pipe side to the pressure holding chamber side, and a pressure sensor unit (15) and a passive IC tag (12) that are housed in the pressure holding chamber, the passive IC tag being connected to the pressure sensor unit,
the marine hose fluid leakage detection system being configured such that a return radio wave is transmitted from the IC tag in accordance with a transmission radio wave transmitted from the radio wave transmitter and that detected pressure data detected by the pressure sensor unit is transmitted via the return radio wave to be received by the radio wave receiver,
the casing comprising a base portion (18a) made of metal and formed in a cylindrical shape, a radio wave transmission portion (18b) configured to watertightly block an upper end portion side of the base portion, and being **characterized in that** the casing further comprises three or more projection portions (19) made of metal and projecting upward from the radio wave transmission portion,
the pressure holding chamber being formed by the base portion and the radio wave transmission portion, and
the projection portions being disposed at intervals in a circumferential direction at positions on an outer circumferential side of the radio wave transmission portion in a plan view, and upper end portions of the respective projection portions being separated from each other.

2. The marine hose fluid leakage detection system according to claim 1,
wherein
the casing comprises a fixing portion engaged with an outer edge portion of the radio wave transmission portion, the fixing portion having an annular shape, and
the radio wave transmission portion is fixed to the base portion via the fixing portion.

3. The marine hose fluid leakage detection system according to claim 1 or 2, wherein the radio wave transmission portion has a top surface that is flat.

4. The marine hose fluid leakage detection system according to any one of claims 1 to 3, wherein each of the projection portions is bent at an intermediate position in a vertical direction and extends toward a center side of the radio wave transmission portion in a plan view.

5. The marine hose fluid leakage detection system according to any one of claims 1 to 4, comprising a cap portion having radio wave permeability, the cap portion being formed such that a cylindrical portion externally fitted to each of the projection portions and at least an upper end portion of the base portion, and an end surface closing an upper end of the cylindrical portion, are integrated, wherein
an inner peripheral side region of each of the projection portions above the radio wave transmission portion is watertightly blocked from the outside by the cap portion.

6. The marine hose fluid leakage detection system according to any one of claims 1 to 5, comprising an adapter portion attachably and detachably placed upright on the surface of the marine hose to communicate with the communication pipe, wherein
the casing is attachably and detachably mounted to an upper end portion of the adapter portion, and
the communication pipe and the casing communicate with each other via the adapter portion.

7. A method for manufacturing the marine hose fluid leakage detection system according to any one of claims 1 to 6, comprising:
in a specification determination step for the detector, with a combination of heights, widths, thicknesses, shapes, number of, and positions of the projection portions changed, grasping a strength of the return radio wave received by the radio wave receiver under predetermined identical conditions and specifying the combination in which the grasped strength of the return radio wave is higher than a predetermined threshold value; and
in a placement step for the detector, placing, on the surface of the marine hose, the detector that adopts the specified combination to communicate with the communication pipe.

8. The method for manufacturing the marine hose fluid leakage detection system according to claim 7, wherein a plurality of different positions of the IC tag in the circumferential direction with respect to the projection portions in a plan view are set, and the strength of the return radio wave received by the radio wave receiver under the predetermined identical conditions is grasped, and in the placement step for the detector, the detector is placed on the surface of the marine hose to communicate with the communication pipe in a state where the IC tag is fixed at the position in the circumferential direction where the grasped strength of the return radio wave is relatively high.

## Patentansprüche

1. Flüssigkeits-Leckagedetektionssystem für Marineschläuche, umfassend:
eine Verbindungsleitung (10), die sich an einer Oberfläche eines Marineschlauchs (1) erstreckt und mit einer Flüssigkeitsrückhalteschicht (7) in Verbindung steht, die in dem Marineschlauch ausgebildet ist, wobei der Marineschlauch mit einer Schwimmschicht (8) versehen ist;
einen Detektor (11), der an der Oberfläche des Marineschlauchs so angeordnet ist, dass er mit der Verbindungsleitung in Verbindung steht; sowie
einen Funkwellen-Sender (22a) und einen Funkwellen-Empfänger (22b), die außerhalb des Marineschlauchs angeordnet sind,
wobei der Detektor ein Gehäuse (18) eine Druckhaltekammer (18c), die sich im Inneren des Gehäuses befindet, ein Rückschlagventil (17), das zwischen der Verbindungsleitung und der Druckhaltekammer so angeordnet ist, dass es nur einen Strom von der Seite der Verbindungsleitung zu der Seite der Druckhaltekammer zulässt, und eine Drucksensor-Einheit (15) sowie einen passiven IC-Tag (12) umfasst, die in der Druckhaltekammer aufgenommen sind, wobei der passive IC-Tag mit der Drucksensor-Einheit verbunden ist,
das Flüssigkeits-Leckagedetektionssystem für Marineschläuche so konfiguriert ist, dass von dem IC-Tag entsprechend einer von dem Funkwellen-Sender gesendeten Sende-Funkwelle eine Rück-Funkwelle gesendet wird und dass von der Drucksensor-Einheit erfasste Druckdaten über die Rück-Funkwelle gesendet und von dem Funkwellen-Empfänger empfangen werden,
wobei das Gehäuse einen Basisabschnitt (18a), der aus Metall besteht und in einer zylindrischen Form ausgebildet ist, einen Funkwellen-Sendeabschnitt (18b) umfasst, der so konfiguriert ist, dass er eine Seite des oberen Endabschnitts des Basisabschnitts wasserdicht abschließt, und **dadurch gekennzeichnet, dass** das Gehäuse des Weiteren drei oder mehr Vorsprungsabschnitte (19) umfasst, die aus Metall bestehen und von dem Funkwellen-Sendeabschnitt nach oben vorstehen,
die Druckhaltekammer durch den Basisabschnitt und den Funkwellen-Sendeabschnitt gebildet wird, und
die Vorsprungsabschnitte in einer Draufsicht in Abständen in einer Umfangsrichtung an Positionen an einer Außenumfangsseite des Funkwellen-Sendeabschnitts angeordnet sind, und obere Endabschnitte der jeweiligen Vorsprungsabschnitte voneinander getrennt sind.

2. Flüssigkeits-Leckagedetektionssystem für Marineschläuche nach Anspruch 1, wobei das Gehäuse einen Befestigungsabschnitt umfasst, der mit einem äußeren Randabschnitt des Funkwellen-Sendeabschnitts in Eingriff ist, wobei der Befestigungsabschnitt eine Ringform hat, und
der Funkwellen-Sendeabschnitt über den Befestigungsabschnitt an dem Basisabschnitt befestigt ist.

3. Flüssigkeits-Leckagedetektionssystem für Marineschläuche nach Anspruch 1 oder 2, wobei der Funkwellen-Sendeabschnitt eine obere Fläche hat, die eben ist.

4. Flüssigkeits-Leckagedetektionssystem für Marineschläuche nach einem der Ansprüche 1 bis 3, wobei jeder der Vorsprungsabschnitte an einer Zwischenposition in einer vertikalen Richtung gebogen ist und sich in einer Draufsicht zu einer Mittelseite des Funkwellen-Sendeabschnitts hin erstreckt.

5. Flüssigkeits-Leckagedetektionssystem für Marineschläuche nach einem der Ansprüche 1 bis 4, das einen Kappenabschnitt umfasst, der Funkwellen-Durchlässigkeit aufweist, wobei der Kappenabschnitt so ausgebildet ist, dass ein zylindrischer Abschnitt, der von außen auf jeden der Vorsprungsabschnitte aufgepasst ist und wenigstens ein oberer Endabschnitt des Basisabschnitts, und eine Endfläche, die ein oberes Ende des zylindrischen Abschnitts abschließt, integral ausgebildet sind, wobei
ein Bereich einer Innenumfangsseite jedes der Vorsprungsabschnitte oberhalb des Funkwellen-Sendeabschnitts durch den Kappenabschnitt von außen wasserdicht abgeschlossen ist.

6. Flüssigkeits-Leckagedetektionssystem für Marineschläuche nach einem der Ansprüche 1 bis 5, das einen Adapterabschnitt umfasst, der anbringbar und abnehmbar aufrecht an der Oberfläche des Marineschlauchs angeordnet ist und mit der Verbindungsleitung in Verbindung steht, wobei
das Gehäuse anbringbar und abnehmbar an einem oberen Endabschnitt des Adapterabschnitts montiert ist, und
die Verbindungsleitung und das Gehäuse über den Adapterabschnitt miteinander in Verbindung stehen.

7. Verfahren zum Herstellen des Flüssigkeits-Leckagedetektionssystems für Marineschläuche nach einem der Ansprüche 1 bis 6, das umfasst:
in einem Spezifikations-Bestimmungschritt für den Detektor, bei einer geänderten Kombination von Höhen, Breiten, Dicken, Formen, Anzahl und Positionen der Vorsprungsabschnitte, Erfassen einer Stärke der durch den Funkwellen-Empfänger unter vorgegebenen identischen Bedingungen empfangenen Rück-Funkwelle und Spezifizieren der Kombination, bei der die erfasste Stärke der Rück-Funkwelle über einem vorgegebenen Schwellenwert liegt; sowie
Positionieren des Detektors, der die spezifizierte Kombination annimmt, zum Herstellen von Verbindung mit der Verbindungsleitung in einem Positionierungsschritt für den Detektor.

8. Verfahren zum Herstellen des Flüssigkeits-Leckagedetektionssystems für Marineschläuche nach Anspruch 7, wobei eine Vielzahl verschiedener Positionen des IC-Tags in der Umfangsrichtung in Bezug auf die Vorsprungsabschnitte in einer Draufsicht festgelegt werden und die Stärke der durch den Funkwellen-Empfänger unter den vorgegebenen identischen Bedingungen empfangenen Rück-Funkwelle erfasst wird, und in dem Positionierungsschritt für den Detektor der Detektor zum Herstellen von Verbindung mit der Verbindungsleitung auf der Oberfläche des Marineschlauchs in einem Zustand positioniert wird, in dem das IC-Tag an der Position in der Umfangsrichtung befestigt ist, an der die erfasste Stärke der Rück-Funkwelle relativ groß ist.

## Revendications

1. Système de détection de fuite de fluide pour tuyau marin, comprenant :
un tuyau de communication (10) s'étendant sur une surface d'un tuyau marin (1) et communiquant avec une couche de rétention de fluide (7) formée dans le tuyau marin, le tuyau marin étant doté d'une couche flottante (8) ;
un détecteur (11) placé sur la surface du tuyau marin pour communiquer avec le tuyau de communication ; et
un émetteur d'onde radio (22a) et un récepteur d'onde radio (22b) qui sont placés à l'extérieur du tuyau marin,
le détecteur comprenant un boîtier (18), une chambre de maintien de pression (18c) disposé à l'intérieur du boîtier, un clapet anti-retour (17) interposé entre le tuyau de communication et la chambre de maintien de pression pour ne permettre qu'un écoulement allant du côté tuyau de communication au côté chambre de maintien de pression, et une unité de capteur de pression (15) et une étiquette IC passive (12) qui sont logées dans la chambre de maintien de pression, l'étiquette IC passive étant reliée à l'unité de capteur de pression,
le système de détection de fuite de fluide pour tuyau marin étant configuré de sorte qu'une onde radio de retour est transmise depuis l'étiquette IC conformément à une onde radio de transmission transmise par l'émetteur d'onde radio et que des données de pression détectées qui sont détectées par l'unité de capteur de pression sont transmises via l'onde radio de retour à recevoir par le récepteur d'onde radio,
le boîtier comprenant une partie de base (18a) constituée de métal et formée en une forme cylindrique, une partie de transmission d'onde radio (18b) configurée pour bloquer de manière étanche à l'eau un côté partie d'extrémité supérieure de la partie de base, et **caractérisé en ce que** le boîtier comprend en outre trois parties en saillie ou plus (19) constituées de métal et faisant saillie vers le haut depuis la partie de transmission d'onde radio,
la chambre de maintien de pression étant formée par la partie de base et la partie de transmission d'onde radio, et
les parties en saillie étant disposées à des intervalles dans une direction circonférentielle à des positions sur un côté circonférentiel externe de la partie de transmission d'onde radio sur une vue en plan, et des parties d'extrémité supérieure des parties en saillie respectives étant séparées les unes des autres.

2. Système de détection de fuite de liquide pour tuyau marin selon la revendication 1, dans lequel
le boîtier comprend une partie de fixation en prise avec une partie de bord externe de la partie de transmission d'onde radio, la partie de fixation ayant une forme annulaire, et
la partie de transmission d'onde radio est fixée à la partie de base via la partie de fixation.

3. Système de détection de fuite de liquide pour tuyau marin selon la revendication 1 ou 2, dans lequel la partie de transmission d'onde radio a une surface supérieure qui est plate.

4. Système de détection de fuite de liquide pour tuyau marin selon l'une quelconque des revendications 1 à 3, dans lequel chacune des parties en saillie est pliée à une position intermédiaire dans une direction verticale et s'étend vers un côté central de la partie de transmission d'onde radio sur une vue en plan.

5. Système de détection de fuite de liquide pour tuyau marin selon l'une quelconque des revendications 1 à 4, comprenant une partie de capuchon ayant une perméabilité aux ondes radio, la partie de capuchon étant formée de sorte qu'une partie cylindrique ajustée de manière externe sur chacune des parties en saillie et au moins une partie d'extrémité supérieure de la partie de base, et une surface d'extrémité fermant une extrémité supérieure de la partie cylindrique, sont intégrées, dans lequel une région latérale périphérique interne de chacune des parties en saillie au-dessus de la partie de transmission d'onde radio est bloquée de manière étanche à l'eau vis-à-vis de l'extérieur par la partie de capuchon.

6. Système de détection de fuite de liquide pour tuyau marin selon l'une quelconque des revendications 1 à 5, comprend une partie adaptatrice placée verticalement de manière attachable et détachable sur la surface du tuyau marin pour communiquer avec le tuyau de communication, dans lequel
le boîtier est monté de manière attachable et détachable sur une partie d'extrémité supérieure de la partie adaptatrice, et
le tuyau de communication et le boîtier communiquent entre eux via la partie adaptatrice.

7. Procédé de fabrication du système de détection de fuite de liquide pour tuyau marin selon l'une quelconque des revendications 1 à 6, comprenant :
lors d'une étape de détermination de spécification pour le détecteur, avec une combinaison de hauteurs, largeurs, épaisseurs, formes, nombre et positions des parties en saillie modifiée, le captage d'une force de l'onde radio de retour reçue par le récepteur d'onde radio dans des conditions identiques prédéterminées et la spécification de la combinaison dans laquelle la force captée de l'onde radio de retour est supérieure à une valeur seuil prédéterminée ; et
lors d'une étape de mise en place du détecteur, la mise en place, sur la surface du tuyau marin, du détecteur qui adopte la combinaison spécifiée pour communiquer avec le tuyau de communication.

8. Procédé de fabrication du système de détection de fuite de liquide pour tuyau marin selon la revendication 7, dans lequel une pluralité de positions différentes de l'étiquette IC dans la direction circonférentielle par rapport aux parties en saillie sur une vue en plan sont établies, et la force de l'onde radio de retour reçue par le récepteur d'onde radio dans les conditions identiques prédéterminées est captée, et lors de l'étape de mise en place du détecteur, le détecteur est mis en place sur la surface du tuyau marin pour communiquer avec le tuyau de communication dans un état où l'étiquette IC est fixée à la position dans la direction circonférentielle où la force captée de l'onde radio de retour est relativement élevée.
